# EUROPEAN PATENT APPLICATION

(11) **EP 4 209 870 A1**
(43) Date of publication of application: **12.07.2023**
(21) Application number: 21874260.9
(22) Date of filing: 16.09.2021
(51) Int. Cl.: G06F 3/041

(54) **SPLIT-SCREEN DISPLAY CONTROL METHOD AND APPARATUS, AND ELECTRONIC DEVICE AND STORAGE MEDIUM**

(30) Priority: 29.09.2020 CN 202011049091
(71) Applicant: Huawei Technologies Co., Ltd., Shenzhen, Guangdong 518129 (CN)
(72) Inventor: LIU, Zhenyu, Shenzhen, Guangdong 518129 (CN)
(74) Representative: Maiwald GmbH
(86) International application number: PCT/CN2021/118698
(87) International publication number: WO 2022/068599

(57) **Abstract**

A split-screen display control method and apparatus, an electronic device, and a storage medium are disclosed. The method includes: After a recently used task preview procedure is entered, obtaining a recently used task list, and displaying at least two tasks in the recently used task list in split screen by using a touchscreen; in response to a second operation instruction for the touchscreen, changing any one of the at least two tasks that are displayed in split screen on the touchscreen to another task in the recently used task list; and in response to a third operation instruction for the touchscreen, exiting a recently used task preview procedure, opening applications corresponding to at least two tasks currently displayed in split screen on the touchscreen, and simultaneously displaying application interfaces of the applications corresponding to the at least two current tasks on the touchscreen. This method resolves a problem in the conventional technology that task combination editing cannot be performed in a recently used application preview procedure is resolved, thereby providing more choices for a user to open tasks in the preview phase of the recently used tasks.

## Description

### TECHNICAL FIELD

The present invention relates to the field of display control technologies, and in particular, to a split-screen display control method and apparatus, an electronic device, and a storage medium.

### BACKGROUND

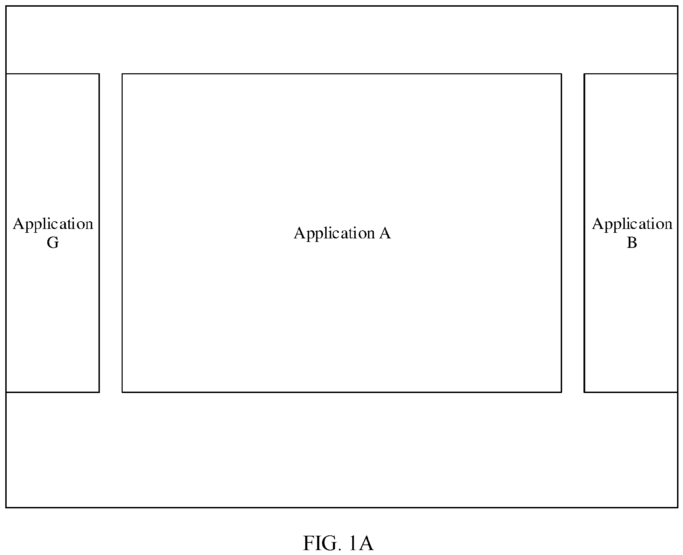

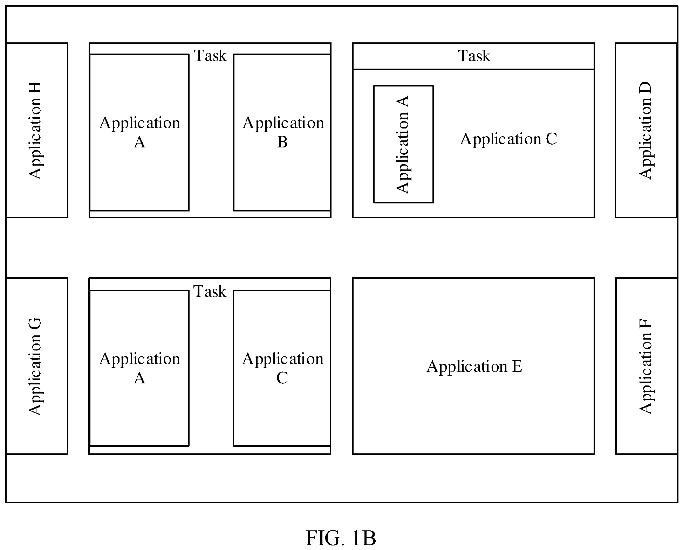

Large screens and foldable screens are more widely used in modern terminal devices. Although a modern terminal device has a large screen, a mode of an operation such as viewing an application or a picture is still the same as that on a small-screen mobile phone terminal. Specifically, in a conventional technology, to view a recently used application, a user may open a corresponding task list by tapping a task key or swiping up from the bottom of a screen, where the task list is usually an application preview list including one column (as shown in FIG. 1A) or a plurality of columns (as shown in FIG. 1B). When the user taps any task in the list, an application corresponding to the task is opened, and an application interface of the application is displayed on the screen. Even if a task tapped by the user is a combination of two applications, the user cannot replace an application in the application combination in a preview phase of a recently used application. For example, in a preview phase of a recently used application, the user can tap only one task in a task list, where the task corresponds to an application A or the task is a combination of the application A and an application B. After the user taps the task, the application A is opened, and an application interface of the application A is displayed on the screen; or the application A and the application B are opened, and application interfaces of the application A and the application B are displayed in split screen. A disadvantage is that a plurality of target tasks cannot be freely combined in a preview phase of a recently used application, and only one task can be selected by the user.

### SUMMARY

Embodiments of the present invention provide a split-screen display control method and apparatus, an electronic device, and a storage medium. In the split-screen display control method, recently used tasks may be combined in a preview phase of the recently used tasks, applications corresponding to the combined tasks are directly opened after a recently used application preview procedure is exited, and application interfaces of the opened applications are displayed in split screen. The method resolves a problem in the conventional technology that task combination editing cannot be performed in the recently used application preview procedure, thereby providing more choices for a user to open tasks in the preview phase of the recently used tasks.

An embodiment of the present invention provides a split-screen display control method, applied to an electronic device having a touchscreen. The method includes:
in response to a first operation instruction for the touchscreen, entering a recently used task preview procedure, and after the recently used task preview procedure is entered, obtaining a recently used task list, and displaying at least two tasks in the recently used task list in split screen on the touchscreen;
in response to a second operation instruction for the touchscreen, changing any one of the at least two tasks displayed in split screen on the touchscreen to another task in the recently used task list; and
in response to a third operation instruction for the touchscreen, exiting the recently used task preview procedure, opening applications that correspond to the at least two tasks and that are currently displayed in split screen on the touchscreen, and simultaneously displaying, on the touchscreen, application interfaces of the applications corresponding to the at least two current tasks.

Further, before the displaying at least two tasks in the recently used task list in split screen on the touchscreen, the method further includes:
configuring the recently used task list to a last-in-first-out stack structure including at least two columns; and
dividing the touchscreen into display subareas of a corresponding quantity based on a quantity of column items in the recently used task list, where the display subarea includes a first display window, where
the displaying the at least two tasks in the recently used task list in split screen on the touchscreen includes:
   separately displaying, in first display windows of a corresponding quantity, stack top tasks in the recently used task list.

Further, the simultaneously displaying, on the touchscreen, the application interfaces of the applications corresponding to the at least two current tasks includes:
separately displaying, in the display subareas of a corresponding quantity, the application interfaces of the applications corresponding to corresponding tasks, where
when a task corresponds to a plurality of applications, a multi-application task is displayed in the following manner:
   further dividing the display subarea corresponding to the multi-application task, to display application interfaces of the plurality of applications in the same display subarea in split screen; or
   displaying any application in the multi-application task in the corresponding display subarea, and displaying remaining applications in the multi-application task in a floating window.

Further, the method further includes:
in a state in which the touchscreen displays the application interfaces of the applications corresponding to the at least two tasks in split screen:
in response to a fourth operation instruction for the display subarea, exchanging positions of application interfaces of applications corresponding to any two of the at least two tasks.

Further, the method further includes:
in a state in which the touchscreen displays the application interfaces of the applications corresponding to the at least two tasks in split screen:
in response to a fifth operation instruction for the display subarea, adjusting an application interface displayed in split screen in the display subarea corresponding to the multi-application task to be displayed in a floating window, or adjusting an application interface displayed in a floating window in the display subarea corresponding to the multi-application task to be displayed in split screen.

Further, the method further includes:
in a state in which the touchscreen displays the application interfaces of the applications corresponding to the at least two tasks in split screen:
in response to a sixth operation instruction for the touchscreen, adjusting a stack position of a task in a corresponding column in the recently used task list, controlling an original task in a second stack position to float and replace an original stack top task, opening an application corresponding to a current stack top task, and displaying an application interface of the application corresponding to the current stack top task in a corresponding display subarea.

Further, the method further includes:
in a state in which the touchscreen displays a single application interface:
in response to a seventh operation instruction for the touchscreen, entering an application parallel preview mode; and
in the application parallel preview mode, in response to a touch instruction for a function control of a current application, dividing a current display area of the touchscreen into a display area A and a display area B, controlling the display area A to display an original interface of the current application, and controlling the display area B to display a new interface that responds to the touch instruction.

An embodiment of the present invention further provides a split-screen display control apparatus, including a processor and a memory, where the memory is configured to store at least one instruction, and when the instruction is loaded and executed by the processor, the foregoing split-screen display control method is implemented.

An embodiment of the present invention further provides an electronic device, where the electronic device has a touchscreen, and the electronic device includes the foregoing split-screen display control apparatus.

An embodiment of the present invention further provides a computer-readable storage medium, where the computer-readable storage medium stores a computer program, and when the computer program is executed by a processor, the foregoing split-screen display control method is implemented.

According to the foregoing technical solution, after the recently used task preview procedure is entered, at least two tasks in the recently used task list are displayed in split screen on the touchscreen, and the at least two tasks displayed in split screen are replaced with another task (a target task of the user) in the recently used task list in a preview phase of the recently used tasks. After the recently used task preview procedure is exited, an application that corresponds to the at least two tasks and that is currently displayed in split screen is directly opened, and an application interface of the opened application is displayed in split screen after the application is opened. The foregoing solution resolves a problem in the conventional technology that task combination editing cannot be performed in the recently used application preview procedure, thereby providing more choices for the user to open tasks in the preview phase of the recently used tasks.

### BRIEF DESCRIPTION OF DRAWINGS

FIG. 1A is a schematic diagram of an application preview list in the conventional technology;
FIG. 1B is a schematic diagram of an application preview list in the conventional technology;
FIG. 2 is a schematic diagram of a system architecture according to an embodiment of the present invention;
FIG. 3 is a schematic flowchart of adjusting a recently used task list according to an embodiment of the present invention;
FIG. 4 is a schematic diagram of adjusting a recently used task list according to an embodiment of the present invention;
FIG. 5A is a schematic diagram of split-screen display after a recently used task list is adjusted according to an embodiment of the present invention;
FIG. 5B is a schematic diagram of displaying a floating window after a recently used task list is adjusted according to an embodiment of the present invention;
FIG. 6 is a signaling diagram of a procedure for opening recently used tasks according to an embodiment of the present invention;
FIG. 7 is a schematic diagram of an application quick switching interface according to an embodiment of the present invention;
FIG. 8 is a signaling diagram of an application quick switching procedure according to an embodiment of the present invention;
FIG. 9 is a schematic diagram of an application parallel preview interface according to an embodiment of the present invention;
FIG. 10 is a signaling diagram of an application parallel preview procedure according to an embodiment of the present invention; and
FIG. 11 is a schematic diagram of a structure of a split-screen display control apparatus according to an embodiment of the present invention.

### DESCRIPTION OF EMBODIMENTS

To make the objectives, technical solutions, and advantages of embodiments of the present invention clearer, the following clearly and completely describes the technical solutions in embodiments of the present invention with reference to accompanying drawings in embodiments of the present invention. Apparently, the described embodiments are some but not all of the embodiments of the present invention. All other embodiments obtained by a person of ordinary skill in the art based on embodiments of the present invention without creative efforts shall fall within the protection scope of the present invention.

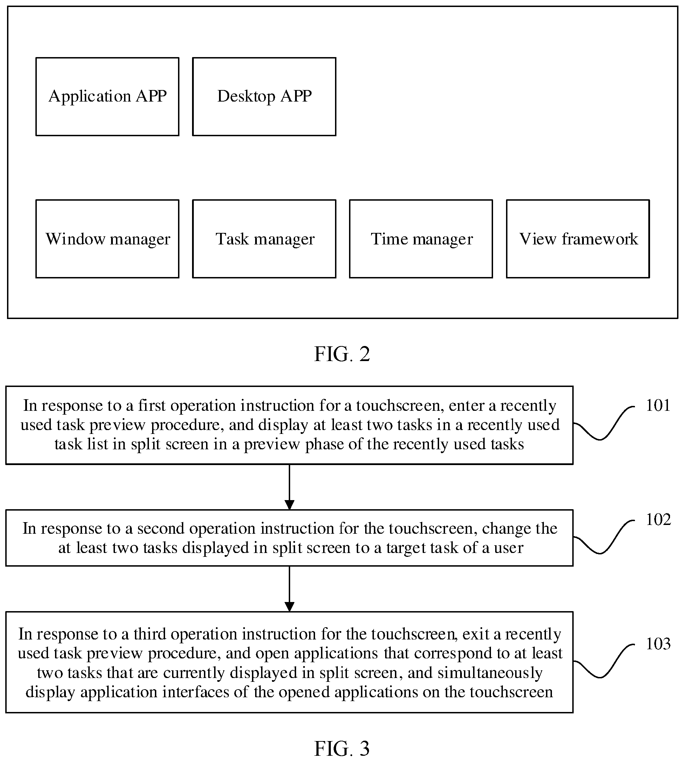

FIG. 2 is a schematic diagram of a system architecture according to an embodiment of the present invention. As shown in FIG. 2, the system framework may include an application APP, a desktop APP, a window manager, a task manager, a task manager, a time manager, and a view framework (view framework).

The application APP runs at an application layer and presents a UI interaction interface for a user to use functions of the application, such as a gallery APP, a social APP, a shopping APP, and the like.

The desktop APP runs at the application layer and is a home screen module of a terminal, and displays icons of installed applications and recently used applications for the user to select, operate, and use. In embodiments of the present invention, the desktop APP is mainly responsible for presenting a multi-column display effect, and performing interface interaction operations such as preview, switching, and combination of a plurality of columns.

The window manager is mainly responsible for managing window layers and a display mode. An application view is displayed via a window entity. In embodiments of the present invention, the window manager is mainly responsible for managing a window display area and a display form of applications in a plurality of columns, including a position and a size of each application window after window grouping, combination, and removal, and application window display forms such as common, split-screen, floating, and picture-in-picture.

The task manager is mainly responsible for managing a task status of each application running in a system. The task status is recorded in a form of task stack, and a query function is provided. Each application interface is a task in a running life cycle. In embodiments of the present invention, the task manager is mainly responsible for record management after application tasks in a plurality of columns are adjusted.

The event manager is mainly responsible for receiving an event on a screen, parsing the event, searching for an application window where a touch is performed, and distributing the event to the window. The window then distributes the event to a view of a corresponding application for processing.

The view framework is a display basis and includes display materials of an application interface, including displaying interface content, monitoring an event to respond to a user operation, and the like. In embodiments of the present invention, the view framework is mainly responsible for distributing a response to a finger touch event and displaying content.

The foregoing describes only functional modules related to embodiments of the present invention, and functional modules included in a corresponding electronic device are not limited thereto.

FIG. 3 is a schematic flowchart of adjusting a recently used task list according to an embodiment of the present invention. As shown in FIG. 3, task combination editing may be performed on recently used tasks in a preview phase of the recently used tasks by performing the following steps.

Step 101: In response to a first operation instruction for a touchscreen, enter a recently used task preview procedure, and display at least two tasks in a recently used task list in split screen in a preview phase of the recently used tasks.

Step 102: In response to a second operation instruction for the touchscreen, change the at least two tasks displayed in split screen in step 101 to another task (a target task of a user) in the task list.

Step 103: In response to a third operation instruction for the touchscreen, exit a recently used task preview procedure, and open applications that correspond to at least two tasks that are currently displayed in split screen, and simultaneously display application interfaces of the opened applications on the touchscreen.

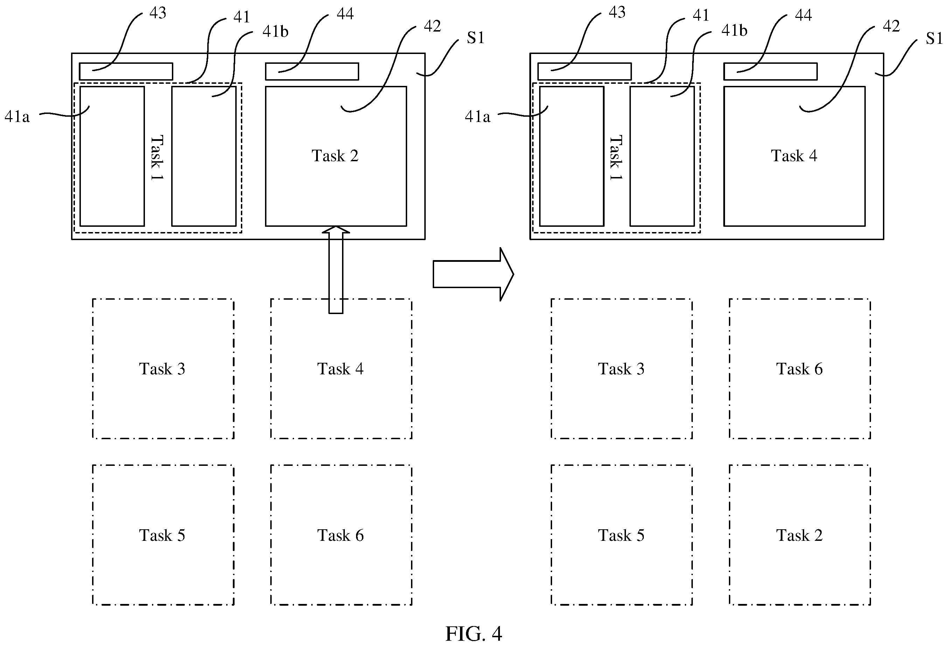

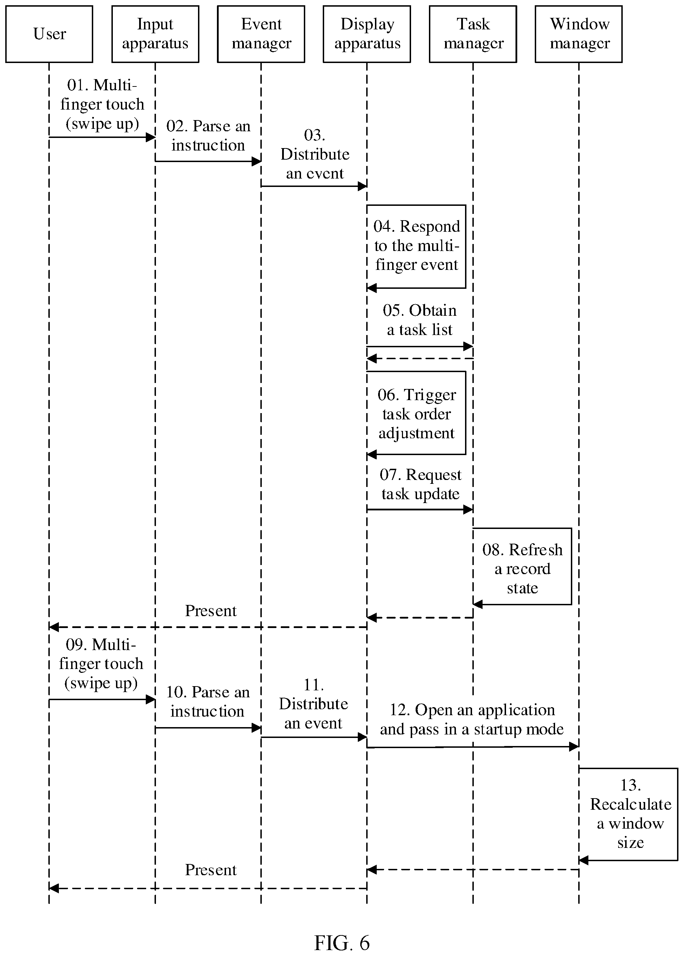

Based on FIG. 4 and FIG. 6, step 101 to step 103 are described as follows.

The first operation instruction for the touchscreen may be that the user swipes up from the bottom (triggering of entering a touch target for the recently used task preview procedure) of the touchscreen with two fingers. After receiving the first operation instruction, an input apparatus converts the first operation instruction into an instruction that can be identified by an electronic device system, and transmits the converted instruction to an event manager of the electronic device system.

After receiving the instruction, the event manager parses the instruction into an event, and distributes the event to an application window (that is, a display apparatus) in which coordinates of the current event are located.

In response to the event, the display apparatus obtains a recently used task list from a task manager, and displays the obtained recently used task list on the touchscreen. Because there is a problem of an excessive quantity of recently used tasks, at least two tasks in the recently used task list may be displayed in split screen on the touchscreen. It should be noted that the recently used task may be a task started by the user on a current day, or may be a task started by the user in the last five hours. A specific time of the recently used task is not limited. After the recently used tasks are obtained, the recently used tasks may be sorted by default to obtain a recently used task list, where a sorting rule thereof may be sorting by start time of the tasks or sorting by accumulated running time of the tasks. To facilitate adjustment of a display sequence of the recently used task list, the recently used task list may be further configured as a last-in first-out stack structure including at least two columns. For ease of description, the following uses an example in which two tasks in the recently used task list are displayed in split screen on the touchscreen for corresponding description, and this shall not be construed as a limitation.

For example, as shown in FIG. 4, the recently used task list obtained is a list of a two-column stack structure, where a task stack of the first column includes a task 1, a task 3, and a task 5, and a task stack of the second column includes a task 2, a task 4, and a task 6. The task 1 and task 2 are two tasks having a longer accumulated running time than that of other tasks. In default sorting, stack top tasks in the current two-column task stack are the task 1 and the task 2. When a recently used task preview procedure is entered, stack top tasks (the task 1 and the task 2) that are ranked top by default may be displayed in split screen on a touchscreen S1. Before display is performed, the touchscreen S1 may be divided into two display subareas, and related information of the task 1 and related information of the task 2 are separately displayed in the two display subareas. In addition, the display subarea may be further divided into a first display window and a second display window. As shown in FIG. 4, the first display window 41 is used to display application information (for example, an application thumbnail interface) of an application corresponding to a stack top task (the task 1) in the task stack of the first column; the first display window 42 is used to display application information of an application corresponding to a stack top task (the task 2) in the task stack of the second column; the second display window 43 is used to display an application name of the application corresponding to the stack top task in the task stack of the first column; and the second display window 44 displays an application name of the application corresponding to the stack top task in the task stack of the second column. If a current task displayed in split screen corresponds to a plurality of applications, the first display window may be further divided into display sub-windows of a corresponding quantity, so as to separately display application information of the plurality of applications by using the corresponding quantity of display sub-windows. As shown in FIG. 4, the task 1 corresponds to two applications (a first application and a second application), and the task 2 corresponds to one application (a third application). That is, application information of the first application may be displayed in a first display sub-window 41a, and application information of the second application may be displayed in a second display sub-window 41b.

In a preview phase of the recently used tasks, a stack position of a target task in a task stack of a corresponding column may be further adjusted according to a second operation instruction of the user for the touchscreen S1. Specifically, as shown in FIG. 4, the user may swipe up or down in any display subarea to trigger task order adjustment. The task manager changes a stack top task in the task stack of a corresponding column to a next task or a previous task in a task stack of a current column; updates an order of the recently used task list; displays, based on the updated recently used task list, application information of an application corresponding to a current stack top task in the task stack of the first column of the recently used task list and application information of an application corresponding to a current stack top task in the task stack of the second column of the recently used task list in the first display window 41 and the second display window, respectively; and adaptively displays a response application name in the second display window. For example, as shown in FIG. 4, an application thumbnail interface of an application corresponding to the task 2 is currently displayed in the first display window 42. The user swipes up in a display subarea in which the first display window 42 is located. Based on a last-in first-out rule, the task 4 in a second stack position of a task stack of the second column floats to a stack top position, a task 6 at a stack bottom of the stack floats to a second stack position, and the task 2 that is originally at the stack top returns to the stack bottom, and the recently used task list is updated based on the adjustment of the stack position. Display content in the first display window 42 is changed to an application thumbnail interface of an application corresponding to the task 4 based on the updated recently used task list. The task manager provides a task reading interface, and updates and saves an updated recently used task list (task status) after receiving an update (refresh) request instruction (a recently used task list update request instruction) sent by the display apparatus.

In the preview phase of the recently used tasks, a recently used task preview procedure is exited according to a third operation instruction of the user for the touchscreen, applications corresponding to two tasks currently displayed in split screen on the touchscreen are opened, and the touchscreen simultaneously displays application interfaces of the applications corresponding to the two current tasks. Specifically, the third operation instruction may be an instruction triggered after a finger that controls the touchscreen is lifted. The display apparatus ends the recently used task preview procedure in response to the third operation instruction, and sends a split-screen display request to the window manager. The split-screen display request includes application identifiers of applications corresponding to the task 1 and the task 4 in the first display window 41 and the first display window 42 (for example, stack top tasks in the updated recently used task list are the task 1 and the task 4). The window manager provides an interface for adjusting a form, a status, and an attribute of a window. After the split-screen display request is received, a size of a task window is recalculated, and application interfaces of applications corresponding to the task 1 and the task 2 are separately displayed in display subareas. The task 1 corresponds to two applications (a first application and a second application), and the task 4 corresponds to one task (a fourth application). After the first application, the second application, and the fourth application are opened, application interfaces of the first application, the second application, and the fourth application are separately displayed, in a specified display mode, in display subareas whose window sizes are recalculated.

When a task corresponds to a plurality of applications, a multi-application task is displayed in the following manner: A display subarea corresponding to the multi-application task is further divided, so as to display application interfaces of the plurality of applications in a same display subarea in split screen; or any application in the multi-application task is displayed in a corresponding display subarea, and other applications in the multi-application task are displayed in a floating window.

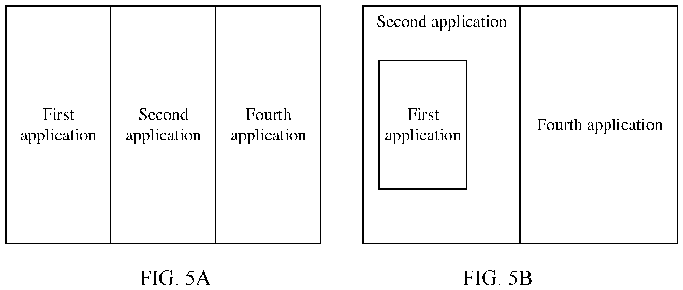

Specifically, when a set display mode is a split-screen display mode, in a phase of displaying an application interface, a quantity of display subareas that need to be divided may be first determined based on a quantity of tasks. In this example, the quantity of tasks is 2 (the task 1 and the task 4), and the display area of the touchscreen is divided into two display subareas. Because the task 1 corresponds to two applications, the corresponding display subareas need to be further divided, to ensure clarity and aesthetic appearance of display content, window sizes of the two display subareas need to be replanned. A size of a display subarea corresponding to the task 4 may be set to 1/2 of a display subarea corresponding to the task 1. Application interfaces of the first application, the second application, and the fourth application may be separately displayed based on a division mode shown in FIG. 5A. The application interfaces of the first application and the second application are located in a same display subarea, and the application interface of the fourth application is located in another display subarea.

When the set display mode is a floating window display mode, application interfaces of the first application, the second application, and the fourth application may be separately displayed based on the division mode shown in FIG. 5B. The application interfaces of the first application and the second application are located in a same display subarea, the first application is displayed on the application interface of the second application in an overlapping mode in the floating window display mode, and the application interface of the fourth application is located in another display subarea.

In this embodiment, in a state in which the touchscreen displays the application interfaces of the applications corresponding to the two tasks in split screen, in response to the fourth operation instruction for the display subarea, positions of the application interfaces of the applications corresponding to the two current tasks may be exchanged. Specifically, when the touchscreen normally displays the application interfaces in split screen, as shown in FIG. 5A, the touchscreen displays the application interfaces of the first application, the second application, and the fourth application in split screen. The user may touch and hold an application interface of one of the applications and drag the application interface to either of other two application interfaces to complete exchanging of the positions of the application interfaces.

In this embodiment, in a state in which the touchscreen displays application interfaces of applications corresponding to at least two tasks in split screen, in response to a fifth operation instruction for the display subarea, an application interface displayed in split screen in the display subarea corresponding to the multi-application task is adjusted to be displayed in a floating window, or an application interface displayed in a floating window in the display subarea corresponding to the multi-application task is adjusted to be displayed in split screen. Specifically, when the touchscreen normally displays the application interfaces in split screen, as shown in FIG. 5A, the touchscreen displays the application interfaces of the first application, the second application, and the fourth application in split screen. The user may touch and hold the application interface of the first application and drag the application interface to a specified edge position of the screen, so that the application interface of the first application is switched from split-screen display to floating window display shown in FIG. 5B. When the touchscreen normally displays the application interface in a floating window, as shown in FIG. 5B, the touchscreen displays the application interfaces of the second application and the fourth application in split screen. The application interface of the first application is displayed on the second application interface in a floating window display mode in an overlapping mode. The user may touch and hold the application interface of the first application and drag the application interface to a specified edge position of the screen, so that the application interface of the first application is switched from floating window display to split screen display shown in FIG. 5A.

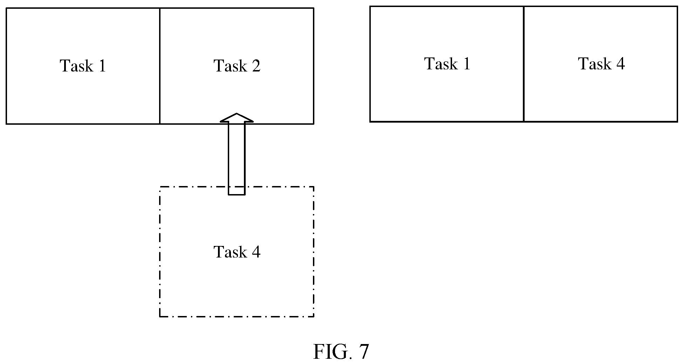

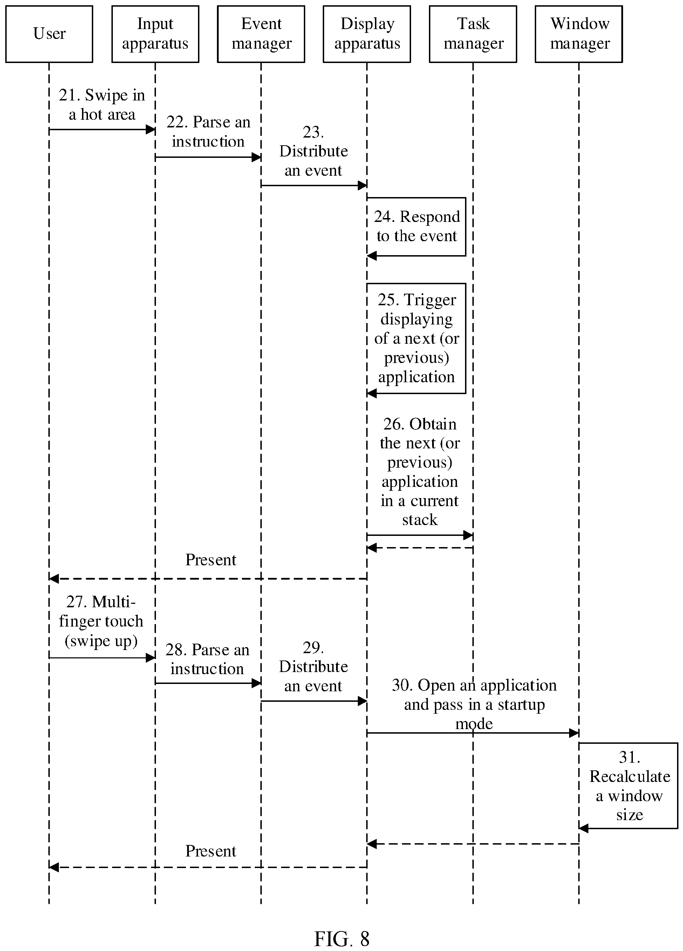

In this embodiment, in a state in which the touchscreen displays the application interfaces of the applications corresponding to the two tasks in split screen, in response to a sixth operation instruction for the touchscreen, a stack position of a task in a corresponding column in the recently used task list is adjusted, an original task in a second stack position is controlled to float and replace an original stack top task, an application corresponding to a current stack top task is opened, and an application interface of the application corresponding to the current stack top task is displayed in a corresponding display subarea. Specifically, with reference to FIG. 7 and FIG. 8, the touchscreen displays application interfaces of applications corresponding to a task 1 and a task 2 in split screen, and a user may quickly switch between applications by swiping up or down in any display subarea. If the user swipes up in a display subarea (an area in the display subarea may be used as a swiping touch target for quickly switching an application) in which the task 2 is located, the user may further swipe up in a non-swiping touch target in the display subarea to quickly switch between applications. Specifically, when the user swipes up or down in the non-swiping touch target in the display subarea, and both a swiping speed and a swiping distance are greater than corresponding thresholds, the swiping may also be identified as an operation instruction for quickly switching an application. An input apparatus receives and parses the operation instruction, converts the operation instruction into an instruction that can be identified by a system of an electronic device, and transfers the instruction to the system event manager. After receiving the instruction, the event manager parses the instruction into an event, and distributes the event to an application window (a display apparatus) in which coordinates of the current event are located. In response to the event, the display apparatus first obtains a next task (a task 4) in a stack from a task manager, and then directly opens a task corresponding to the task 4 in a second stack position, and then displays, in the display subarea, an application interface of an application corresponding to the task 4, so as to complete quick switching of the application. It should be noted that, in a quick switching phase of an application, an operation instruction triggered by swiping up and down in the display subarea by the user also triggers an action of updating and saving a sequence of a recently used task list, but the process is invisible to the user. That is, a window manager provides an interface for adjusting a form, a status, and an attribute of a window. After receiving an update request, a status of the task window is refreshed, a size of a current application window is recalculated, and an application interface of an opened application is displayed in a corresponding display subarea. In another implementation, in a state in which the touchscreen displays application interfaces of applications corresponding to two tasks in split screen, in response to a sixth operation instruction for the touchscreen, the user may swipe up and down in any display subarea. An input apparatus receives and parses the operation instruction, converts the operation instruction into an instruction that can be identified by a system of an electronic device, and transfers the instruction to the system event manager. After receiving the instruction, the event manager parses the instruction into an event, and distributes the event to an application window (a display apparatus) in which coordinates of the current event are located. In response to the event, the display apparatus enables a target display subarea operated by the user to enter a task preview procedure, so that the user determines tasks included in the task stack of the column. After the target task moves to a stack top position, the user lifts a finger that touches the touchscreen, an application corresponding to the target task is opened, and an application interface of the application corresponding to the target task is displayed in the display subarea.

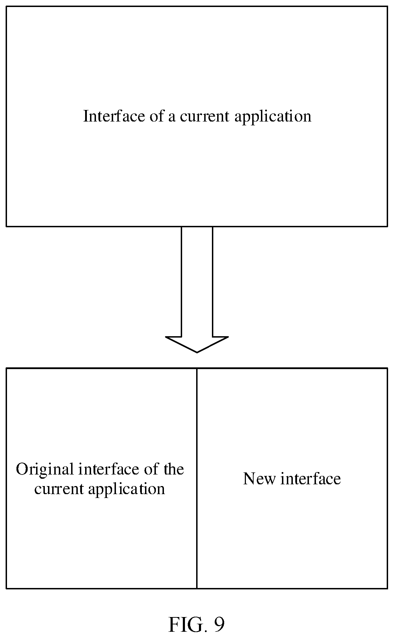

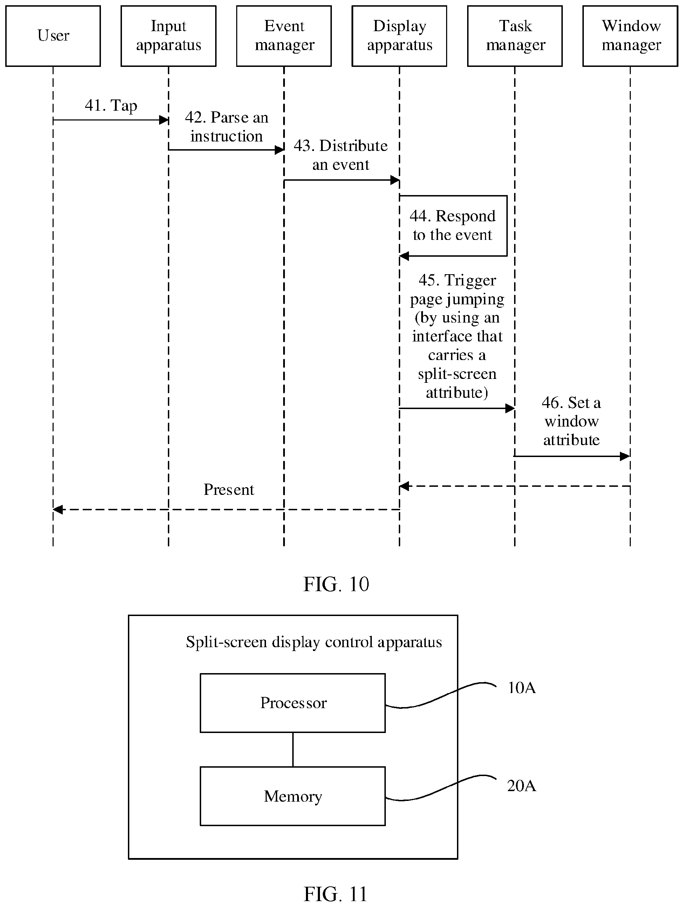

In this embodiment, in a state in which the touchscreen displays a single application interface, in response to a seventh operation instruction for the touchscreen, an application parallel preview mode is entered. In the application parallel preview mode, in response to a touch instruction for a function control of a current application, a current display area of the touchscreen is divided into a display area A and a display area B, the display area A is controlled to display an original interface of the current application, and the display area B is controlled to display a new interface that responds to the touch instruction. Specifically, with reference to FIG. 9 and FIG. 10, a single application is displayed on a touchscreen, for example, only a chat interface of an instant messaging application is displayed. A user taps a control on a display interface, for example, a touch key is set on the display interface. After the user taps the touch key, an input apparatus receives and parses an operation instruction, converts the operation instruction into an instruction that can be identified by a system, and transfers the instruction to a system event manager. After receiving the instruction, the event manager parses the instruction into an event, and distributes the event to an application window (a display apparatus) in which coordinates of the current event are located. In response to the event, the display apparatus (which may be an application responding to the tap event herein) enters an application parallel preview mode. When the user taps a function control on an interface of the instant messaging application to switch to a new interface for performing an operation, for example, the user taps a function control for sending a photo, when the interface jumps, an interface provided by a system task manager is invoked, and a startup related parameter (such as split-screen or a floating window) is carried, and a corresponding form is selected to open the interface. After receiving an update request, a window manager refreshes the status of the task window, recalculates the size of a current application window, and displays the application in a current window. Specifically, when an interface jumps, an interface provided by the system task manager is invoked, a split-screen mode is selected to open an interface, a current display area is divided into a display area A and a display area B, the display area A is controlled to display an original interface of the instant messaging application, and the display area B is controlled to display an interface of a photo library.

As shown in FIG. 11, an embodiment of the present invention further provides a split-screen display control apparatus. The apparatus includes a processor 10A and a memory 20A. The memory 20A is configured to store at least one instruction, and when the instruction is loaded and executed by the processor 10A, the foregoing split-screen display control method is implemented.

According to another aspect, an embodiment of the present invention further provides an electronic device, where the electronic device has a touchscreen, and the electronic device includes the foregoing split-screen display control apparatus.

According to another aspect, an embodiment of the present invention further provides a computer-readable storage medium, where the computer-readable storage medium stores a computer program, and when the computer program is executed by a processor, the foregoing split-screen display control method is implemented.

It should be noted that the terminal involved in the embodiments of the present invention may include but is not limited to a personal computer (Personal Computer, PC), a personal digital assistant (Personal Digital Assistant, PDA), a wireless handheld device, a tablet computer (Tablet Computer), a mobile phone, an MP3 player, an MP4 player, and the like.

It may be understood that the application may be an application installed on the terminal (nativeApp), or may be a web application (webApp) of a browser on the terminal. This is not limited in this embodiment of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present invention, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units Some or all of the units may be selected according to actual needs to achieve the purpose of the solutions in the embodiments.

In addition, functional units in the embodiments of the present invention may be integrated into one processing unit, or each of the units may exist alone physically, or two or more units may be integrated into one unit. The integrated unit may be implemented in a form of hardware, or may be implemented as a combination of hardware and a software functional unit.

When the integrated unit is implemented in a form of a software functional unit, the integrated unit may be stored in a computer-readable storage medium. The software functional unit is stored in a storage medium and includes several instructions for instructing a computer apparatus (which may be a personal computer, a server, or a network apparatus) or a processor (Processor) to perform some of the steps of the methods according to the embodiments of the present invention. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely example embodiments of the present invention, but are not intended to limit the present invention. Any modification, equivalent replacement, or improvement made within the spirit and principle of the present invention should fall within the protection scope of the present invention.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of the present invention.

## Claims

1. A split-screen display control method, applied to an electronic device having a touchscreen, wherein the method comprises:
in response to a first operation instruction for the touchscreen, entering a recently used task preview procedure, and after the recently used task preview procedure is entered, obtaining a recently used task list, and displaying at least two tasks in the recently used task list in split screen on the touchscreen;
in response to a second operation instruction for the touchscreen, changing any one of the at least two tasks displayed in split screen on the touchscreen to another task in the recently used task list; and
in response to a third operation instruction for the touchscreen, exiting the recently used task preview procedure, opening applications that correspond to the at least two tasks and that are currently displayed in split screen on the touchscreen, and simultaneously displaying, on the touchscreen, application interfaces of the applications corresponding to the at least two current tasks.

2. The method according to claim 1, wherein before the displaying at least two tasks in the recently used task list in split screen on the touchscreen, the method further comprises:
configuring the recently used task list to a last-in first-out stack structure comprising at least two columns; and
dividing the touchscreen into display subareas of a corresponding quantity based on a quantity of column items in the recently used task list, wherein the display subarea comprises a first display window, wherein
the displaying at least two tasks in the recently used task list in split screen on the touchscreen comprises:
separately displaying stack top tasks in the recently used task list in first display windows of a corresponding quantity.

3. The method according to claim 2, wherein the simultaneously displaying, on the touchscreen, application interfaces of the applications corresponding to the at least two current tasks comprises:
separately displaying, in the display subareas of a corresponding quantity, the application interfaces of the applications corresponding to the corresponding tasks, wherein
when a task corresponds to a plurality of applications, a multi-application task is displayed in the following manner:
further dividing the display subarea corresponding to the multi-application task, so as to display application interfaces of the plurality of applications in the same display subarea in split screen; or
displaying any application in the multi-application task in the corresponding display subarea, and displaying remaining applications in the multi-application task in a floating window.

4. The method according to claim 1, wherein the method further comprises:
in a state in which the touchscreen displays the application interfaces of the applications corresponding to the at least two tasks in split screen:
in response to a fourth operation instruction for the display subarea, exchanging positions of application interfaces of applications corresponding to any two of the at least two tasks.

5. The method according to claim 3, wherein the method further comprises:
in a state in which the touchscreen displays the application interfaces of the applications corresponding to the at least two tasks in split screen:
in response to a fifth operation instruction for the display subarea, adjusting an application interface that is displayed in split screen in the display subarea and that corresponds to the multi-application task to be displayed in a floating window, or adjusting an application interface that is displayed in a floating window in the display subarea and that corresponds to the multi-application task to be displayed in split screen.

6. The method according to claim 2, wherein the method further comprises:
in a state in which the touchscreen displays the application interfaces of the applications corresponding to the at least two tasks in split screen:
in response to a sixth operation instruction for the touchscreen, adjusting a stack position of a task in a corresponding column in the recently used task list, controlling an original task in a second stack position to float and replace an original stack top task, opening an application corresponding to a current stack top task, and displaying an application interface of the application corresponding to the current stack top task in a corresponding display subarea.

7. The method according to claim 1, wherein the method further comprises:
in a state in which the touchscreen displays a single application interface:
in response to a seventh operation instruction for the touchscreen, entering an application parallel preview mode; and
in the application parallel preview mode, in response to a touch instruction for a function control of a current application, dividing a current display area of the touchscreen into a display area A and a display area B, controlling the display area A to display an original interface of the current application, and controlling the display area B to display a new interface that responds to the touch instruction.

8. A split-screen display control apparatus, wherein the apparatus comprises:
a processor and a memory, wherein the memory is configured to store at least one instruction, and when the instruction is loaded and executed by the processor, the split-screen display control method according to any one of claims 1 to 7 is implemented.

9. An electronic device, wherein the electronic device has a touchscreen, and the electronic device comprises the split-screen display control apparatus according to claim 8.

10. A computer-readable storage medium, wherein the computer-readable storage medium stores a computer program, and when the computer program is executed by a processor, the split-screen display control method according to any one of claims 1 to 7 is implemented.
